# EUROPÄISCHE PATENTSCHRIFT

(11) **EP 2 346 710 B1**
(45) Veröffentlichungstag und Bekanntmachung des Hinweises auf die Patenterteilung: **06.08.2014**
(21) Anmeldenummer: 09798868.7
(22) Anmeldetag: 10.11.2009
(51) Int. Cl.: B60L 5/19

(54) **STROMABNEHMER FÜR EIN SCHIENENFAHRZEUG**
CURRENT COLLECTOR FOR A RAILWAY VEHICLE
COLLECTEUR DE COURANT POUR VÉHICULE FERROVIAIRE

(30) Priorität: 10.11.2008 DE 102008056542
(43) Veröffentlichungstag der Anmeldung: 27.07.2011
(73) Patentinhaber: Bombardier Transportation GmbH, 10785 Berlin (DE); Stemmann-Technik GmbH, 48465 Schüttorf (DE)
(72) Erfinder: TESSMER, Wolfram, 13587 Berlin (DE); HENGSTERMANN, Thomas, 48432 Rheine (DE); MAASS, Jörg-Torsten, 16515 Oranienburg (DE); ÜTRECHT, Werner, 48465 Schüttorf (DE); PREIS, Alexander, Montreal, H2J1P6 (CA); DIERSCHKE, Thomas, 69214 Eppelheim (DE); NAGEL, Thomas, 13465 Berlin (DE); DRAXL, Andreas, 66999 Hinterweidenthal (DE)
(74) Vertreter: Griepenstroh, Jörg
(86) Internationale Anmeldenummer: PCT/DE2009/001585
(87) Internationale Veröffentlichungsnummer: WO 2010/051807

(56) Entgegenhaltungen:
- DE-A1- 19 914 566
- DE-U1- 9 304 251
- DE-U1- 29 601 731
- FR-A- 1 193 020

## Beschreibung

Die vorliegende Erfindung betrifft einen Stromabnehmer für ein Schienenfahrzeug zur Kontaktierung mit einem Fahrdraht einer Oberleitung mit einer Stromabnehmerwippe, die auf einem Träger gelagert und über den Träger mit dem Schienenfahrzeug verbunden ist, wobei die Breite der Stromabnehmerwippe an mindestens zwei unterschiedliche Stromübertragungssysteme anpassbar ist, mit einem oder mehreren Sätzen von mindestens einer Schleifleiste, die auf der Stromabnehmerwippe angeordnet sind, mit einer Bügelanordnung, die auf der Stromabnehmerwippe quer zur Fahrtrichtung verlaufend und benachbart zu mindestens einer der Schleifleisten angeordnet ist, wobei die Bügelanordnung an jedem Ende ein Auflaufhorn aufweist, wobei die Auflaufhörner gegensätzlich zueinander und quer zur Fahrtrichtung verschiebbar sind, und mit einer Stelleinrichtung, mit der der Abstand zwischen den Auflaufhörnern quer zur Fahrtrichtung veränderbar ist.

Ein Stromabnehmer ist eine Vorrichtung an Fahrzeugen, beispielsweise Schienenfahrzeugen, zum Übertragen elektrischer Energie von einer fest montierten stromführenden Leitung, insbesondere einem Fahrdraht einer Oberleitung, zu den elektrischen Einrichtungen des Fahrzeugs. Anwendung finden Stromabnehmer neben elektrischen Schienenfahrzeugen auch in Oberleitungsbussen, auf die die Erfindung gleichermaßen anwendbar ist.

Unter den Stromabnehmern sind sogenannte Scheren- oder Pantografen-Stromabnehmer und Einholmstromabnehmer weit verbreitet. Der Pantografen-Stromabnehmer ist eher bei älteren Schienenfahrzeugen zu finden, wohingegen der Einholmstromabnehmer aufgrund seines geringeren Platzbedarfs und der leichteren Bauweise vielfach bei moderneren Schienenfahrzeugen verwendet wird. Neben Einsystemfahrzeugen werden Einholmstromabnehmer häufig insbesondere bei Mehrsystemfahrzeugen verwendet, also Fahrzeugen, die für verschiedene Stromübertragungssysteme in verschiedenen Ländern geeignet sind.

Grundsätzlich weist ein Stromabnehmer einen Träger auf, der in der Regel elektrisch, hydraulisch oder pneumatisch höhenverstellbar ist. Auf dem Träger ist eine Wippe mit einer Schleifleistenanordnung zur Kontaktierung mit dem Fahrdraht der Oberleitung und zur Übertragung elektrischer Energie angeordnet. Die Schleifleistenanordnung kann eine oder mehrere Schleifleisten aufweisen, abhängig von der Spannung und den zu übertragenden Stromstärken.

An der Wippe ist ferner eine quer zur Fahrtrichtung verlaufende Bügelanordnung vorgesehen, deren Enden zum Dach des Schienenfahrzeugs hin gebogen sind. Diese Enden, die im Folgenden als Auflaufhörner bezeichnet werden, verhindern, dass sich der Stromabnehmer an der Fahrleitung verhaken kann, wenn die Fahrleitung durch Seitenauslenkung den Schleifleistenbereich verlassen sollte.

Wie zuvor angedeutet, existieren in verschiedenen Ländern Europas unterschiedliche Stromübertragungssysteme für Schienenfahrzeuge, die unterschiedliche Breiten der Stromabnehmerwippen erforderlich machen. So beträgt die erforderliche Breite einer Stromabnehmerwippe in Frankreich, Luxemburg, Italien und der Schweiz beispielsweise 1450 mm. In Deutschland, Österreich und Dänemark, teilweise aber auch als zusätzlicher Standard in Frankreich, Luxemburg, Belgien und den Niederlanden, ist eine Wippenbreite von 1950 mm vorzusehen. Norwegen und Schweden fordern 1800 mm. Ein weiterer Standard erfordert beispielsweise auch eine Breite von 1600 mm.

Mehrsystemschienenfahrzeuge für den internationalen Verkehr mussten daher mit mehreren unterschiedlichen Stromabnehmern für je eines der verschiedenen Stromübertragungssysteme ausgestattet sein. Um den damit verbundenen Aufwand zu reduzieren, schlägt die DE 199 14 566 A1 einen Stromabnehmer für Mehrsystemschienenfahrzeuge vor, bei dem zwei separate, in Längsrichtung des Fahrzeugs voneinander beabstandete und quer zu ihm verlaufende Bügel mit je einem seitlichen Auflaufhorn in einer Wippe angeordnet sind, wobei die beiden Auflaufhörner zu entgegengesetzten Seiten des Fahrzeugs weisen. Die beiden Bügel und damit die beiden Auflaufhörner sind mittels je einer hydraulischen oder pneumatischen Stelleinrichtung gegensätzlich zueinander quer zur Fahrtrichtung verschiebbar. Zusätzlich sind zwei in Längsrichtung des Fahrzeugs voneinander beabstandete in der Wippe angeordnete Schleifleisten durch je eine weitere hydraulische oder pneumatische Stelleinrichtung gegensätzlich zueinander quer zur Fahrtrichtung verschiebbar. Auf diese Weise lässt sich der Stromabnehmer eines Schienenfahrzeugs im Fahrbetrieb von einem an ein anderes Stromübertragungssystem anpassen.

Problematisch bei diesem Stand der Technik ist jedoch, dass eine Vielzahl von hydraulischen bzw. pneumatischen Stelleinrichtungen erforderlich ist, da jeder Bügel mit Auflaufhorn und jede Schleifleiste unabhängig voneinander sowohl nach innen als auch nach außen, bezogen auf die Fahrzeugmitte, verschiebbar sein muss. Dies bedeutet einen hohen konstruktiven sowie steuerungstechnischen Aufwand. Aus Sicherheitserwägungen jedoch ist es sehr unwahrscheinlich, dass eine solche zwar höchst universelle, aber sehr komplexe Lösung in der Bahn-Praxis zugelassen werden wird.

Zum Stand der Technik zählt auch die DE 93 04 251 U1, die ebenfalls einen in der Breite verstellbaren Stromabnehmer betrifft und eine Wippe mit einem feststehenden Schleifstück und zu diesem verstellbare Schleifstücke beschreibt.

Es ist daher die Aufgabe der vorliegenden Erfindung, einen Stromabnehmer der zuvor beschriebenen Art dahingehend weiterzubilden, dass der konstruktive und steuerungstechnische Aufwand reduziert wird.

Die zuvor hergeleitete und aufgezeigte Aufgabe wird bei einem Stromabnehmer der eingangs genannten Art durch die kennzeichnenden Merkmale von Patentanspruch 1 gelöst, mit anderen Worten also im Wesentlichen dadurch, dass eine Verstellbarkeit der Schleifleisten im Fahrbetrieb nicht mehr notwendig ist, wobei die Wippe aber so ausgebildet ist, dass in der Länge unterschiedliche Schleifleisten-Paare starr und austauschbar aufgenommen werden können, wobei jeder Satz Schleifleisten für mindestens zwei stromsystemabhängige Wippenbreiten ausgebildet ist. Ferner ist anstelle zweier voneinander in Längsrichtung beabstandeter Bügel nur ein einziger Bügel mit beidseitig je einem Auflaufhorn vorgesehen, wobei die beiden Auflaufhörner entlang einer gemeinsamen Achse, die quer zur Längsrichtung des Schienenfahrzeugs verläuft, gegensätzlich zueinander verschiebbar sind, und zwar dergestalt, dass die Wippe für mindestens zwei stromsystemabhängige Wippenbreiten einsetzbar ist. Zu diesem Zweck ist die dafür vorgesehene Stelleinrichtung dem einen Bügel zugeordnet und weist mindestens eine fluidbetriebene Zylinder-Kolben-Anordnung und mindestens eine damit zusammenwirkende Rückholfeder auf. Insbesondere ist bei der Zylinder-Kolben-Anordnung der Kolben relativ zum Zylinder in einer ersten Richtung, vorzugsweise nach außen, durch Beaufschlagung mit Fluiddruck und in einer zweiten, der ersten Richtung entgegengesetzten Richtung, vorzugsweise nach innen, durch Beaufschlagung mit Federkraft der Rückholfeder bewegbar.

Mit dem zuvor beschriebenen Stromabnehmer, insbesondere der speziellen Wippe, wird ermöglicht, dass ein damit ausgestattetes Schienenfahrzeug betriebsmäßig von einem ersten auf mindestens ein zweites, eine vom ersten abweichende Stromabnehmer-Wippenbreite erforderndes Stromsystem übergehen kann, ohne dafür mit einem zusätzlichen Stromabnehmer ausgestattet sein zu müssen.

Dabei wird die Stelleinrichtung erfindungsgemäß nur in einer Richtung mittels Fluiddruck, insbesondere hydraulisch oder pneumatisch, angetrieben, wohingegen die gegenläufige Bewegung automatisch durch die Spannung der Rückholfeder erfolgt und keinen zusätzlichen steuerungstechnischen Aufwand zur Erzeugung eines gegenläufigen Fluiddrucks bedarf. Auch der konstruktive Aufwand wird durch das Vorsehen einer Rückholfeder, bei der es sich um eine Schraubenfeder handeln kann und die vorzugsweise um die Zylinder-Kolben-Anordnung herum angeordnet ist, deutlich verringert.

So muss die Stelleinrichtung lediglich dann einen Fluiddruck aufbauen, wenn die beiden Auflaufhörner aus ihrer Ausgangslage, beispielsweise nach außen, wegbewegt werden sollen, um beispielsweise die Stromabnehmerbreite zu vergrößern. Soll die Breite wieder verringert werden, braucht lediglich der Fluiddruck entsprechend verringert werden oder im Idealfall die Stelleinrichtung abgeschaltet oder ein Ventil geöffnet werden, was bewirkt, dass durch die Federkraft die Auflaufhörner wieder in ihre Ausgangsposition zurückbewegt werden.

Dabei kann der Bügel gemäß einer ersten alternativen Ausgestaltung dreiteilig sein und ein Scheitelrohr aufweisen, zu dem die beiden Auflaufhörner beweglich sind und das als Führung für die beiden Auflaufhörner dient. Grundsätzlich ist als zweite alternative Ausgestaltung auch denkbar, dass der Bügel zweiteilig ist und die beiden Auflaufhörner ineinander gesteckt sind, also den Bügel ohne zusätzliches Scheitelrohr bilden, und sich gegenseitig führen.

Bei der Alternative, wonach der Bügel dreiteilig ausgebildet ist, kann je Auflaufhorn eine Zylinderkolbenanordnung vorgesehen sein.

Dabei ist es denkbar, dass mindestens eine der Zylinderkolbenanordnungen in den Bügel integriert ist. So kann der Zylinder mit dem Scheitelrohr und der Kolben mit dem Auflaufhorn verbunden sein. Auch der umgekehrte Fall ist denkbar, wonach der Zylinder mit dem Auflaufhorn und der Kolben mit dem Scheitelrohr verbunden ist.

Es ist aber auch denkbar, dass der Zylinder oder der Kolben mindestens einer der Zylinder-Kolben-Anordnungen vom Scheitelrohr gebildet wird, der Zylinder im einen Fall oder der Kolben im anderen Fall also mit dem Scheitelrohr identisch ist.

Entsprechend ist es auch denkbar, dass der Zylinder oder der Kolben mindestens einer der Zylinder-Kolben-Anordnungen vom jeweiligen Auflaufhorn gebildet wird, der Zylinder im einen Fall oder der Kolben im anderen Fall also mit dem jeweiligen Auflaufhorn identisch ist.

Dabei kann je Auflaufhorn eine Rückholfeder vorgesehen sein. Alternativ ist es auch denkbar, dass eine gemeinsame Rückholfeder für beide Auflaufhörner vorgesehen ist, deren eines Ende mit einem der Auflaufhörner und deren anderes Ende mit dem anderen der Auflaufhörner verbunden ist, so dass die Rückholfeder die beiden Auflaufhörner beispielsweise immer nach innen drückt.

Bei der zweiten alternativen Ausgestaltung, wonach der Bügel zweiteilig ist, kann für beide Auflaufhörner zusammen eine gemeinsame Zylinder-Kolben-Anordnung vorgesehen sein.

Dabei ist es denkbar, dass die Zylinder-Kolben-Anordnung in eines oder beide Auflaufhörner integriert ist. Der Zylinder ist dann beispielsweise mit einem und der Kolben mit dem anderen der Auflaufhörner verbunden.

Es ist aber auch denkbar, dass der Zylinder oder der Kolben von einem der Auflaufhörner gebildet wird, der Zylinder im einen Fall oder der Kolben im anderen Fall also mit dem jeweiligen Auflaufhorn identisch ist. Es ist auch denkbar, dass der Zylinder von einem und der Kolben von dem anderen der Auflaufhörner gebildet wird. Dies ist der einfachste Fall einer Zylinder-Kolben-Anordnung.

Auch im Falle eines zweiteiligen Bügels kann für beide Auflaufhörner zusammen eine gemeinsame Rückholfeder vorgesehen sein, deren eines Ende mit einem der Auflaufhörner und deren anderes Ende mit dem anderen der Auflaufhörner verbunden ist, so dass die Rückholfeder beispielsweise die beiden Auflaufhörner immer nach innen drückt.

Gemäß einer weiteren Ausgestaltung des erfindungsgemäßen Stromabnehmers ist die Zylinder-Kolben-Anordnung mittels einer Druckleitung mit einer Steuereinrichtung, insbesondere mit einem Druckbehälter oder einem Kompressor der Steuereinrichtung, verbunden. Dabei ist vorzugsweise die Zylinder-Kolben-Anordnung wie zuvor beschrieben am Stromabnehmer und die Steuereinrichtung im Fahrzeug angeordnet. Die Druckleitung kann dabei mit einem Ventil versehen sein, beispielsweise einem Magnetventil, das den Vorteil hat, dass es auf einfache Weise elektrisch ansteuerbar ist und schnell schaltet. Ein solches Ventil kann unter anderem dazu eingesetzt werden, die Abgabe des den Druck aufbauenden Fluids aus dem Druckbehälter zu steuern. Auch kann durch das Ventil, sobald die Stelleinrichtung die Auflaufhörner in ihre Endposition bewegt hat, die Druckleitung geschlossen werden, um die Endposition beizubehalten.

Gemäß wiederum einer anderen Ausgestaltung des erfindungsgemäßen Stromabnehmers ist die Steuereinrichtung mit Anzeigemitteln zur Anzeige der horizontalen Stellung der Auflaufhörner oder der Breite des Bügels, bezogen auf die Richtung quer zur Fahrtrichtung, versehen. Dies ermöglicht eine einfache Steuerung der Auflaufhörner bzw. der Bügelbreite insbesondere aus dem Fahrzeuginnern, beispielsweise aus dem Führerstand.

Ferner ist gemäß noch einer weiteren Ausgestaltung der Stromabnehmer ein Scherenstromabnehmer bzw. Pantografen-Stromabnehmer oder ein Einholmstromabnehmer.

Schließlich sei hervorgehoben, dass erfindungsgemäß die Schleifleisten insbesondere eine feste Länge haben und unverschieblich sind, um den Konstruktions- und Steuerungsaufwand auf ein Minimum zu reduzieren. Wird gegenüber dem in der DE 199 14 566 A1 offenbarten Stand der Technik auf die Verschiebbarkeit der Schleifleisten verzichtet, muss wahrscheinlich in Kauf genommen werden, dass ein solcher Stromabnehmer nicht für den gesamten infrage kommenden Breitenbereich von 1450 bis 1950 mm der Stromabnehmerwippe verwendbar ist. Wenn jedoch davon ausgegangen wird, dass die vorliegenden Lösung immer nur in angrenzenden bzw. benachbarten Bereichen der Stromabnehmerbreite eingesetzt wird (z.B. können 1800 und 1950 mm Wippenbreite jeweils mit einer festen Schleifleistenbreite von z.B. 1030 mm realisiert werden), kann bei der Ausstattung von Fahrzeugen für grenz- und/oder systemüberschreitenden Einsatz sehr häufig auf mindestens einen sonst zusätzlich notwendigen Dachstromabnehmer verzichtet werden. Gestaltet man die Stromabnehmerwippe so, dass die Schleifleisten gegen solche einer anderen Länge austauschbar befestigt werden können, kann eine Stromabnehmer-Grundbauform für alle Einsatzfälle verwendet werden.

Es ist natürlich auch denkbar, dass die Auflaufhörner zumindest mittelbar mit einer Schleifleiste gekoppelt sind, welche in der Länge einstellbar ist. Die Schleifleiste besitzt hierzu wenigstens zwei relativ zueinander verlagerbare Längenabschnitte Insbesondere wenn die Stelleinrichtungen am fahrzeugdachseitigen Grundgerüst der Stromabnehmerwippe angeordnet ist, kann der konstruktive Aufwand im Bereich des Bügels und der Schleifleiste reduziert werden. Eine stärkere und damit schwerer Stelleinrichtung, die sowohl die Aufläufhörner als auch die Schleifleiste verstellt, kann am Grundgerüst verbleiben und muss nicht mit angehoben werden.

Die Bügelanordnung kann auch in eine Schleifleiste oder in mehrere Schleifleisten integriert sein, wobei sich die verstellbaren Auflaufhörner endseitig von einer Schleifleiste oder mehreren Schleifleisten erstrecken.

Der erfindungsgemäße Stromabnehmer kann auch mit einer Stelleinrichtung versehen, die von wenigstens einer als Differenzialkolben ausgeführten, doppelt wirkenden Zylinder-Kolben-Anordnung gebildet wird.

Wenn besonders große Hubwege oder auch eine Anpassung an mehr als zwei unterschiedliche Breiten der Stromabnehmersysteme gewünscht wird, ist es denkbar, mehrere Zylinder-Kolben-Anordnungen in einer Reihenschaltung anzuordnen. Beispielsweise ist es denkbar, einem Auflaufhorn eine äußere Zylinder-Kolben-Anordnung zuzuordnen und zusätzlich eine innere, d.h. im größeren Abstand zum Auflaufhorn liegende, Zylinder-Kolben-Anordnung vorzusehen. Wenn eine der Zylinder-Kolben-Anordnung druckbeaufschlagt wird, fährt ein Kolben, der mit einer Kolbenstange verbunden ist, aus und das Auflaufhorn wird in eine erste Betriebsstellung verlagert. Wird auch die zweite Zylinder-Kolben-Anordnung druckbeaufschlagt, fährt das Auflaufhorn noch weiter aus und kann in eine zweite Betriebsstellung verlagert werden. Bei unterschiedlich langen Hubwegen ist auch noch eine weitere Betriebsstellung möglich, je nachdem, ob die Zylinder-Kolben-Anordnung mit dem längeren oder diejenige mit dem kürzeren Hubweg zuerst druckbeaufschlagt wird.

In vorteilhafter Weiterbildung sind Arretierungsmittel vorgesehen, mittels welcher die Auflaufhörner in einer ausgefahrenen und/oder einer eingefahrenen Betriebsstellung gegenüber dem Bügel festsetzbar sind. Die Arretierungsmittel können elektrisch, magnetisch oder auch fluidisch betätigt sein. Die Arretierungsmittel können unter dem Einfluss eines Rückstellmittels, beispielsweise in Form einer Federkraft, stehen, durch welche die Arretierungsmittel grundsätzlich in einer Arretierungsposition gehalten werden. Nur wenn die Arretierungsmittel gelöst werden sollen, ist eine Einflussnahme über geeignete Stellmittel, die elektrisch, magnetisch oder fluidisch angetrieben werden, erforderlich. Wenn erforderlich, lassen sich durch die Arretierungsmittel zusätzliche Betriebsstellungen ergänzen.

Die Verwendung von Arretierungsmitteln hat auch den Vorteil, dass die Zylinder-Kolben-Anordnung bei in einer ausgefahrenen und/oder eingefahrenen Betriebsstellung festgesetzten Auflaufhörnern druckfrei geschaltet sein kann. Es ist somit keineswegs erforderlich, dass die Zylinder-Kolben-Anordnungen ständig mit Druck beaufschlagt sein müssen. Prinzipiell ist dies nur während der Verlagerung der Auflaufhörner notwendig.

Es ist möglich, die Arretierungsmittel aus Sicherheitsgründen redundant vorzusehen oder auch verschiedene Arretierungsmittel vorzusehen, um sicherzustellen, dass die Auflaufhörner ihre vorgesehene Betriebsstellung nicht bei Versagen beispielsweise eines elektrischen, magnetischen oder fluidischen Systems verändern können, falls eines dieser Systeme ausfallen sollte.

Im Rahmen der Erfindung ist es möglich, die Zylinder-Kolben-Anordnung außerhalb der Bügelanordnung anzuordnen. Prinzipiell kann die Stelleinheit im Bereich der Stromabnehmerwippe angeordnet sein, d.h. zusammen mit der Wippe angehoben oder abgesenkt werden. Denkbar ist es aber auch, die Stelleinheit am Grundrahmen des Stromabnehmers zu platzierten, so dass diese nur dann mit den Auflaufhörnern in einem Wirkzusammenhang steht, wenn der Stromabnehmer abgesenkt ist. Bei dieser Konfiguration sind die Auflaufhörner folglich in der angehobenen Position nicht verstellbar. Daher ist es notwendig, Arretierungsmittel vorzusehen, durch welche die Betriebsstellung der Auflaufhörner gesichert ist. Wenn die Stromabnehmerwippe abgesenkt wird, können die Auflaufhörner mit geeigneten Koppelmitteln der Stelleinrichtung lösbar in Eingriff gelangen. Die Stelleinrichtung selbst kann wiederum hydraulisch oder pneumatisch ausgeführt sein und steht mit den Auflaufhörnern nur in abgesenkter Stellung in Kontakt.

Es ist denkbar, dass die die Auflaufhörner in der abgesenkten Stellung nur dann in Kontakt mit den Koppelmitteln kommen, wenn die Auflaufhörner verlagert werden sollen. Hierzu können die Koppelmittel selbst in einer Weise verlagert werden, dass sie nach dem Verstellen der Auflaufhörner wieder in eine Grundstellung gebracht werden, in welcher kein Kontakt zu den Auflaufhörnern besteht. Zum Beispiel könnten die Koppelmittel quer zur Stellrichtung der Auflaufhörner und gleichzeitig quer zur Hubrichtung des Stromabnehmers verlagert werden.

Es ist denkbar, dass die Stelleinrichtung und/oder die Koppelmittel gegenüber dem Stromabnehmer elektrisch isoliert ausgeführt sind.

Der erfindungsgemäße Stromabnehmer ist vorzugsweise mit Mitteln zur Signalisierung der Betriebsstellung versehen. Die Signalerzeugung kann optisch, z.B. durch Lichtschranken, erfolgen, aber auch induktiv, magnetisch oder mechanisch oder durch mechanisch betätigte Ventile (z.B. Grenztaster). Auf diese Weise kann die Stellung der Auflaufhörner an die Fahrzeugsteuerung übermittelt werden.

Es gibt nun eine Vielzahl von Ausgestaltungen und Weiterbildungen des erfindungsgemäßen Stromabnehmers. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: ein erstes Ausführungsbeispiel eines Stromabnehmers mit einer Bügelanordnung gemäß der vorliegenden Erfindung in perspektivischer Ansicht;
- Fig. 2a) bis d): weitere Ausführungsbeispiele von Bügelanordnungen für einen Stromabnehmer gemäß der vorliegenden Erfindung in Seitenansicht;
- Figur 3: eine zweite Ausführungsform eines Stromabnehmers für ein Schienenfahrzeug in der ausgefahrenen Position in Frontansicht;
- Figur 4: eine Bügelanordnung eines Stromabnehmers mit doppelt wirkender Zylinder-Kolben-Anordnung;
- Figur 5: eine weitere Ausführungsform einer Bügelanordnung mit hintereinander geschalteten Zylinder-Kolben-Anordnungen;
- Fig. 6a bis 6d: vier unterschiedliche Betriebsstellungen ein- und derselben Bügelanordnung bei unterschiedlich betätigten Zylinder-Kolben-Anordnungen;
- Figur 7: eine Bügelanordnung mit einer Arretierung;
- Figur 8: eine Bügelanordnung mit einer Arretierung, wobei für das linke und rechte Auflaufhorn jeweils getrennt betätigbare Stelleinrichtungen vorgesehen sind;
- Figur 9: eine Bügelanordnung, bei welcher die Auflaufhörner in Wirkzusammenhang mit Koppelmitteln einer Stelleinheit stehen und
- Figur 10: die Bügelanordnung in gegenüber der Stelleinheit angehobener Position.

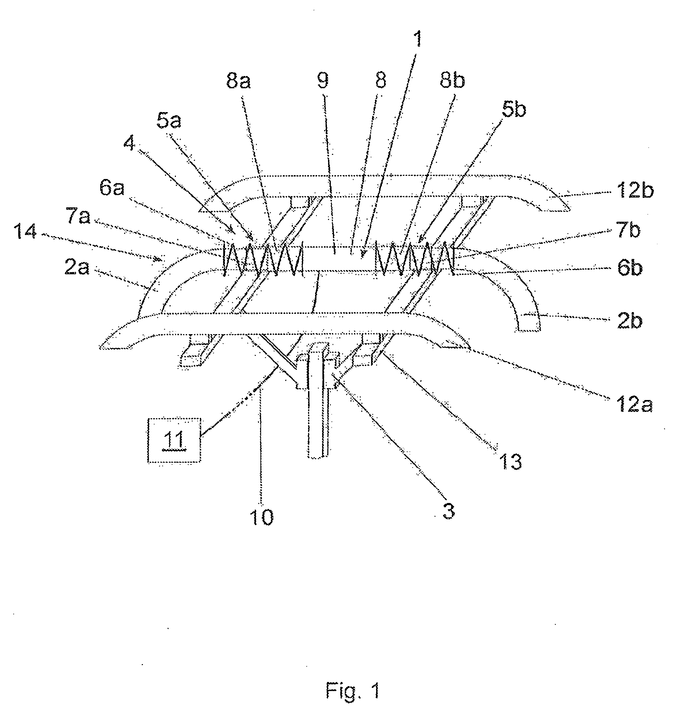

Fig. 1 zeigt schematisch einen Stromabnehmer für ein Schienenfahrzeug, hier ausgebildet als Einholmstromabnehmer, zur Kontaktierung mit einem Fahrdraht einer Oberleitung, wobei eine Stromabnehmerwippe 13 vorgesehen ist, deren Breite an mindestens zwei unterschiedliche Stromübertragungssysteme anpassbar ist. Der Stromabnehmer weist, gelagert auf der Wippe 13, eine Bügelanordnung 14 in Form eines einzelnen quer zur Fahrtrichtung des Schienenfahrzeugs verlaufenden Bügels 1, der im vorliegenden Fall dreiteilig ausgebildet ist, sowie einen Satz Schleifleisten 12a,12b auf. Die drei Teile des Bügels 1 sind ein zentrales Scheitelrohr 9 sowie an jedem Ende des Bügels 1 je ein Auflaufhorn 2a und 2b, welche in dem Scheitelrohr 9 beweglich gelagert und geführt sind.

Die Schleifleisten 12a und 12b des verwendeten Schleifleistensatzes sind so angeordnet und haben jeweils einen solche Länge, dass sie für zwei verschiedene stromsystemabhängige Wippenbreiten einsetzbar sind.

Ferner weist der Stromabnehmer einen Träger 3 auf, der die Stromabnehmerwippe 13 mit dem Schienenfahrzeug (nicht dargestellt), insbesondere dem Dach des Schienenfahrzeugs, verbindet.

Schließlich ist eine Stelleinrichtung 4 vorgesehen, mit der der Abstand zwischen den Auflaufhörnern 2a und 2b quer zur Fahrtrichtung veränderbar ist. Die Stelleinrichtung 4 weist im in Fig. 1 dargestellten Fall zwei fluidbetriebene, das heißt pneumatische, Zylinder-Kolben-Anordnungen 5a und 5b sowie zwei zugeordnete und mit den Zylinder-Kolben-Anordnungen zusammenwirkende Rückholfeder 6a und 6b auf.

Bei den dargestellten Zylinder-Kolben-Anordnungen 5a und 5b ist der Kolben 7a bzw. 7b relativ zum zugehörigen Zylinder 8a bzw. 8b in einer ersten Richtung, hier nach außen, durch Beaufschlagung mit Fluiddruck, also Luftdruck, und in einer zweiten, der ersten Richtung entgegengesetzten Richtung, hier nach innen, durch Beaufschlagung mit der Federkraft der zugeordneten Rückholfeder 6a bzw. 6b bewegbar.

Bei den Rückholfedern 6a und 6b, die im dargestellten Fall um die jeweilige Zylinder-Kolben-Anordnung 5a bzw. 5b herum angeordnet sind, handelt es sich um Schraubenfedern.

Schließlich ist eine Steuereinrichtung 11 vorgesehen, mit der die Zylinder-Kolben-Anordnungen 5a und 5b mittels einer Druckleitung 10, hier einer Druckluftleitung, verbunden sind.

Wie zuvor erwähnt, handelt es sich bei dem dargestellten Ausführungsbeispiel um ein solches, bei dem der Bügel 1 dreiteilig ausgebildet ist, also ein Scheitelrohr 9 und zwei darin beweglich geführte Auflaufhörner 2a und 2b aufweist. Dabei ist vorliegend je Auflaufhorn 2a bzw. 2b eine separate Zylinder-Kolben-Anordnung 5a bzw. 5b vorgesehen, wobei die dem jeweiligen Kolben 7a bzw. 7b jeweils zugeordneten Zylinder 8a bzw. 8b vom Scheitelrohr 9 gebildet werden. Genau genommen ist also ein zentraler Zylinder 8, der mit dem Scheitelrohr 9 identisch ist, vorgesehen, in welchem die beiden Kolben 7a und 7b bewegbar sind. Der Kolben 7a bzw. 7b wird entsprechend von dem jeweiligen Auflaufhorn 2a bzw. 2b gebildet.

Die Druckleitung 10 ist zentral in den Zylinder 8 bzw. das Scheitelrohr 9 geführt. Sobald Luft von der Steuereinrichtung 11 durch die Druckleitung 10 in den Zylinder 8 geleitet wird, verschieben sich die beiden Auflaufhörner 2a und 2b von ihrer Ausgangsposition nach außen. Dabei spannt sich jede der beiden Rückholfedern 6a und 6b. Sobald die Steuereinrichtung den Luftdruck reduziert, beispielsweise durch Öffnen eines Ventils, werden die beiden Auflaufhörner 2a und 2b durch die Federkraft der Rückholfedern 6a und 6b wieder in Richtung ihrer Ausgangslage nach innen bewegt.

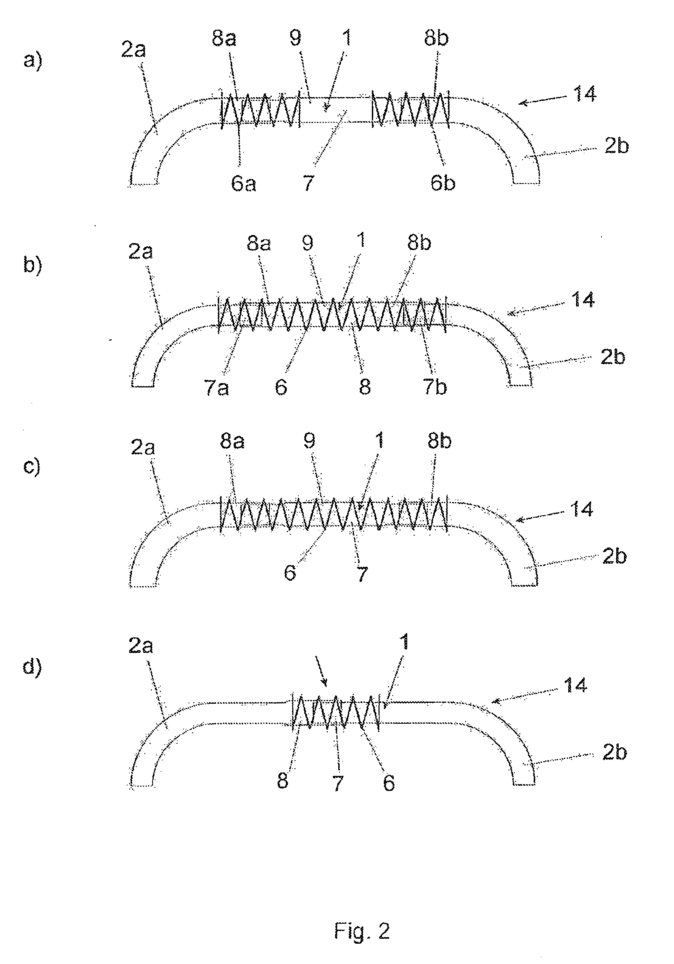

In den Fig. 2a) bis d) sind weitere Ausführungsbeispiele von Bügelanordnungen 14 schematisch dargestellt. Aus Gründen der Übersichtlichkeit wurden die den Bügel 1 mit dem Schienenfahrzeug verbindende Wippe 13, der Träger 3 sowie die Druckleitung 10 und die damit verbundene Stelleinrichtung 11 nicht dargestellt.

Das in Fig. 2a) gezeigte Ausführungsbeispiel unterscheidet sich von dem zuvor anhand von Fig. 1 beschriebenen Ausführungsbeispiel dadurch, dass gemäß Fig. 2a) die beiden Auflaufhörner 2a und 2b der Bügelanordnung 14 nicht in dem Scheitelrohr 9, sondern außen auf dem Scheitelrohr 9 geführt sind. Damit wird also in diesem Fall ein für beide Zylinder-Kolben-Anordnungen 5a und 5b gemeinsamer Kolben 7 von dem Scheitelrohr 9 gebildet, dessen Enden jeweils in dem vom jeweiligen Auflaufhorn 2a bzw. 2b gebildeten Zylinder 8a bzw. 8b geführt sind. Auch in diesem Fall ist je Auflaufhorn 2a bzw. 2b eine Rückholfeder 6a bzw. 6b vorgesehen, die dem vom Fluid aufgebauten Druck entgegenwirkt, um die Auflaufhörner 2a und 2b automatisch, sobald der Druck reduziert wird, in Richtung ihrer Ausgangslage zurückzuführen.

Das in Fig. 2b) dargestellte Ausführungsbeispiel unterscheidet sich von dem in Fig. 1 dargestellten Ausführungsbeispiel lediglich dadurch, dass nicht je Auflaufhorn 2a bzw. 2b jeweils eine Rückholfeder, sondern eine für beide Auflaufhörner 2a und 2b gemeinsame Rückholfeder 6 vorgesehen ist.

Fig. 2c) zeigt ein Ausführungsbeispiel, das dem Aufbau in Fig. 2a) entspricht, mit dem Unterschied, das auch hier eine gemeinsame Rückholfeder 6 vorgesehen ist, die beide Auflaufhörner 2a und 2b gleichzeitig mit einer Federkraft beaufschlagt, die dem Fluiddruck entgegenwirkt.

Fig. 2d) zeigt im Gegensatz zu den vorangehend beschriebenen Figuren eine Bügelanordnung 14, bei dem der einzige Bügel 1 zweiteilig ausgebildet ist und die beiden Auflaufhörner 2a und 2b ineinander gesteckt sind und sich gegenseitig führen.

Dabei ist für beide Auflaufhörner 2a und 2b zusammen eine gemeinsame Zylinder-Kolben-Anordnung 5 vorgesehen, bei der der Zylinder 8 von dem Auflaufhorn 2a und der Kolben 7 von dem Auflaufhorn 2b gebildet wird.

Auch in diesem Fall ist für beide Auflaufhörner 2a und 2b zusammen eine gemeinsame Rückholfeder 6 vorgesehen, deren eines Ende mit dem Auflaufhorn 2a und deren anderes Ende mit dem Auflaufhorn 2b verbunden ist.

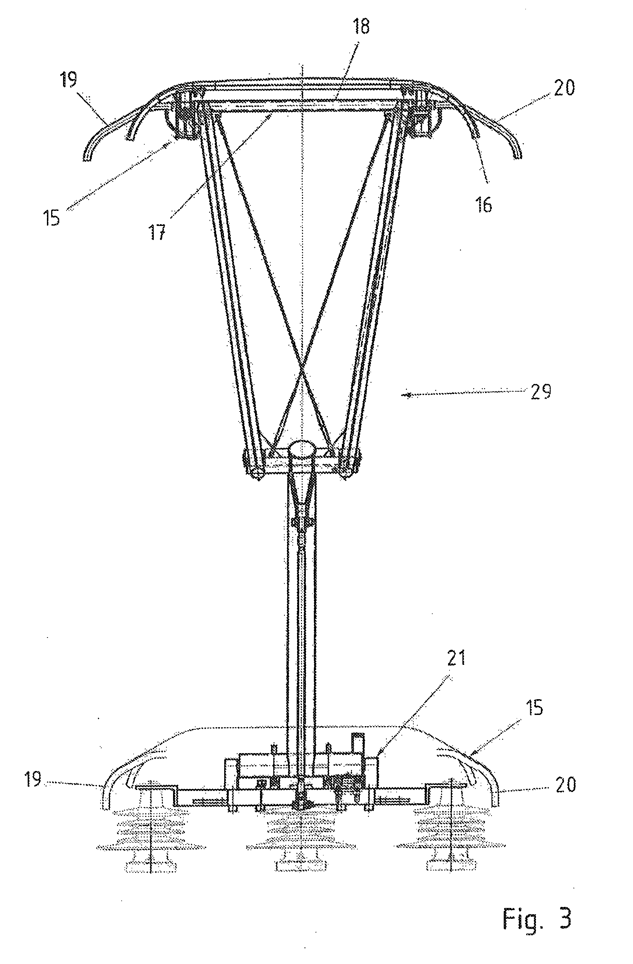

Figur 3 zeigt einen Stromabnehmer für ein nicht näher dargestelltes Schienenfahrzeug. Der Stromabnehmer 29 dient zur Kontaktierung eines Fahrdrahts einer Oberleitung. Der Stromabnehmer 29 ist ein Einholmstromabnehmer, der an seinem oberen Ende eine Stromabnehmerwippe 15 mit einer oder mehreren Schleifleisten 16 und einer oder mehreren Bügelanordnungen 17 aufweist. Bei dieser Ausführungsform sind ein oder mehrere Schleifleisten 16 vorgesehen, wobei sich die Bügelanordnung 17 zwischen den beiden Schleifleisten 16 oder nahe der einen Schleifleiste 16 befindet. Die Bügelanordnung 17 umfasst einen Mittelteil, der nachfolgend als Bügel 18 bezeichnet wird, sowie endseitige Auflaufhörner 19, 20. Der Bügel 18 entspricht bei dieser Ausführungsform dem Scheitelrohr 9 der Ausführungsform der Figuren 1 und 2.

Figur 3 lässt darüber hinaus erkennen, wo sich die Stromabnehmerwippe 15 in der abgesenkten Position befindet. Die Auflaufhörner 19, 20 sowie die Schleifleiste 16 sind ansatzweise in der Nähe des fahrzeugseitigen Grundrahmens 21 dargestellt. Das Gestänge des Stromabnehmers 29 umfasst in diesem Ausführungsbeispiel einen Oberarm mit zwei Holmen, eine Lenkerstange und einen Unterarm mit einem Holm. Bei der vorliegenden Erfindung kommt es maßgeblich auf die Konfiguration der Bügelanordnung 17 an. Die nachfolgenden Figuren beziehen sich somit auf Bügelanordnungen, wie sie beispielsweise bei einem in Figur 3 dargestellten Stromabnehmer 29 zum Einsatz kommen können.

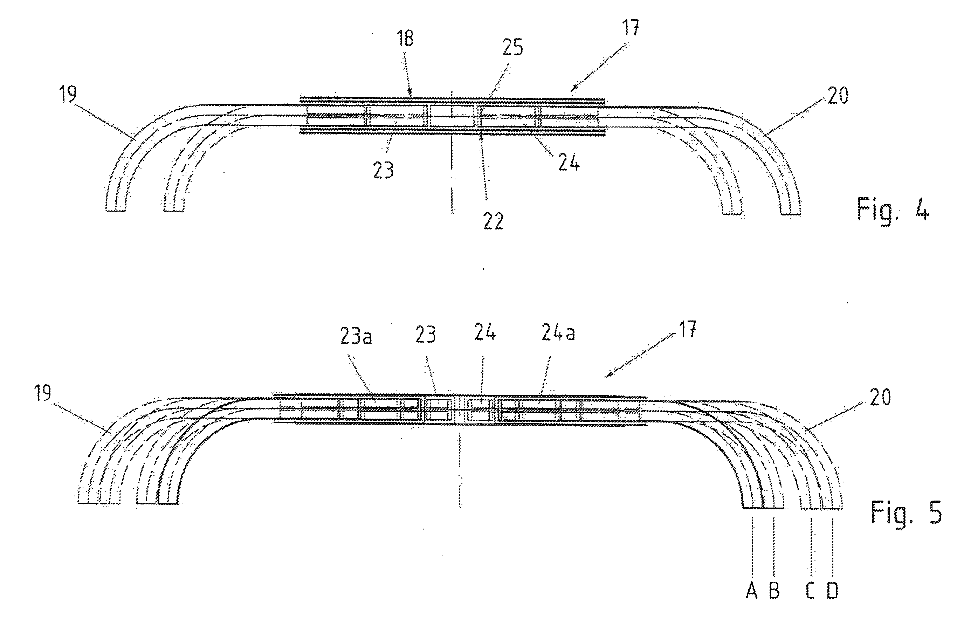

Figur 4 zeigt eine Ausführungsform einer Bügelanordnung 17 mit zwei endseitigen Auflaufhörnern 19, 20, die in entgegengesetzte Richtungen und quer zur Fahrtrichtung verschiebbar sind. Hierzu ist eine in den Mittelteil der Bügelanordnung 17, d.h. in den Bügel 18, eingegliederte Stelleinrichtung 22 vorgesehen. Die Stelleinrichtung 22 besteht aus doppelt wirkenden Zylinder-Kolben-Anordnungen 23, 24. Jedem der Auflaufhörner 19, 20 ist je eine Zylinder-Kolben-Anordnung 23, 24 zugeordnet. Die in entgegengesetzte Richtungen wirkenden Zylinder-Kolben-Anordnungen 23, 24 sind als Differenzialzylinder ausgeführt, d.h. sie sind doppelt wirkend.

Der Antrieb der Zylinder-Kolben-Anordnungen 23, 24 kann mit dem Betriebsfluiddruck des Stromabnehmers 29 erfolgen.

Es ist zu erkennen, dass auch bei dieser Ausführungsform zwei unterschiedliche Breiten eingestellt werden können. Mit durchgezogener Linie ist eine ausgefahrene Betriebsstellung der Bügelanordnung 17 dargestellt. Mit unterbrochener Linie ist eine eingefahrene Betriebsstellung die Bügelanordnung 17 dargestellt. Es ist zu erkennen, dass bei eingefahrener Betriebsstellung ein Kolben 25 entsprechend dem Hubweg des zugehörigen Auflaufhorns 19, 20 näher zur Mitte des Bügels 18 verlagert ist als in ausgefahrener Position. In nicht näher dargestellter Weise sind an den Zylinder-Kolben-Anordnungen 23, 24 jeweils zwei Fluidanschlüsse vorgesehen, um einmal den bodenseitigen Raum der doppelt wirkenden Zylinder-Kolben-Anordnung 23, 24 und zum anderen den von der Kolbenstange durchsetzten Ringraum, d.h. die Ringseite des Differenzialzylinders, mit Druck zu beaufschlagen, wenn eine Rückstellung der Bügelanordnung 18 in die eingefahrene Betriebsstellung gewünscht wird. Eine Rückstellung ist auch über eine nicht näher dargestellte Rückstellfeder möglich. Damit ist eine definierte, z.B. besonders sichere, Betriebsstellung erreichbar auch dann, wenn der Betriebsfluiddruck ausfallen sollte.

Figur 5 zeigt eine Ausführungsform, bei welcher die Auflaufhörner 19, 20 in insgesamt vier mit A bis D bezeichneten Betriebsstellungen verlagerbar sind. Dies wird dadurch erreicht, dass je Auflaufhorn 19, 20 zwei Zylinder-Kolben-Anordnungen 23, 23a, 14, 14a in Reihenschaltung hintereinander geschaltet sind. Wenn keine der Zylinder-Kolben-Anordnungen 23, 23a, 24, 24a betätigt wird, befinden sich die Auflaufhörner 19, 20 in der mit A bezeichneten Betriebsstellung. Werden nur die inneren Zylinder-Kolben-Anordnungen 23, 24 betätigt, ergibt sich die Betriebsstellung B. Die Betriebsstellung C wird dann eingenommen, wenn lediglich die äußeren Zylinder-Kolben-Anordnungen 23a, 24a betätigt werden. Wenn beide Zylinder-Kolben-Anordnungen 23, 23a, 24, 24a gleichzeitig betätigt werden, ergibt sich die Betriebsstellung D.

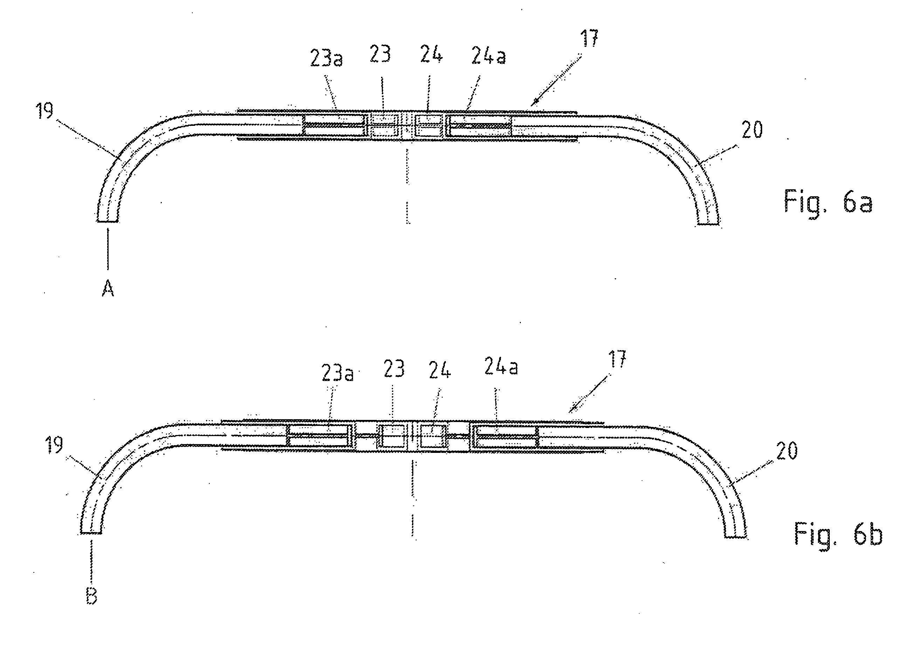

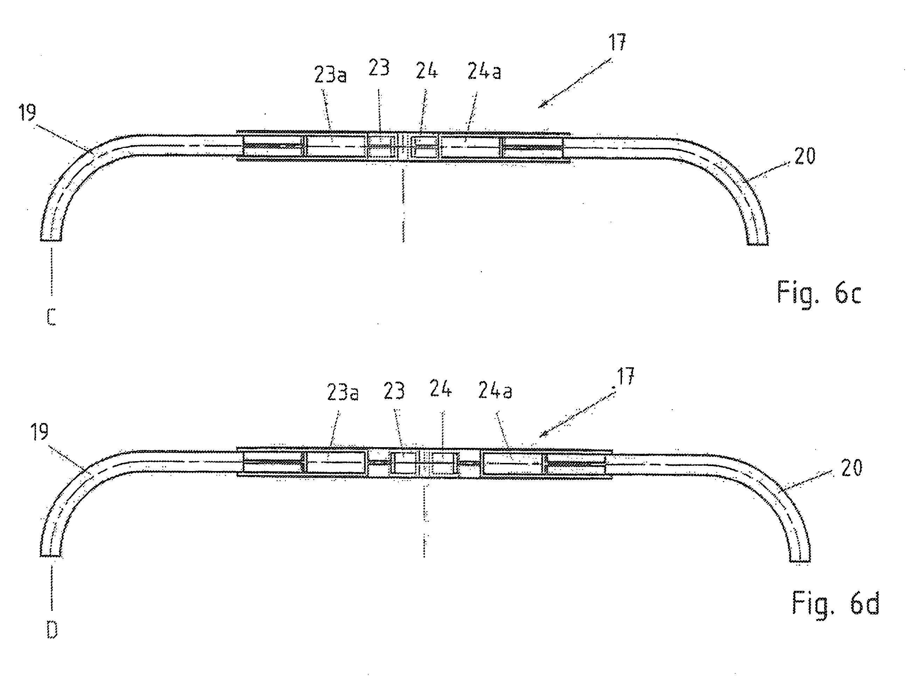

Die Figuren 6a bis 6d verdeutlichen noch einmal die möglichen Schaltungszustände, die in Figur 5 zusammengefasst sind. Figur 6a zeigt dementsprechend die komplett eingefahrene Betriebsstellung A. In Figur 6b sind lediglich die inneren Zylinder-Kolben-Anordnungen 23, 24 betätigt worden, was zur Betriebsstellung B führt. Der Hubweg dieser Zylinder-Kolben-Anordnungen 23, 24 ist kürzer als der Hubweg der äußeren Zylinder-Kolben-Anordnungen 23a, 24a, die erst in den Ausführungsformen gemäß Figuren 6c und 6d betätigt worden sind, und zwar einmal ohne Betätigung der inneren Zylinder-Kolben-Anordnungen 23, 24 (Figur 6c), was zur Betriebsstellung C führt, wohingegen in Figur 6d schließlich beide Zylinder-Kolben-Anordnungen 23, 23a, 24, 24a betätigt worden sind. Figur 6d zeigt dementsprechend die Betriebsstellung D.

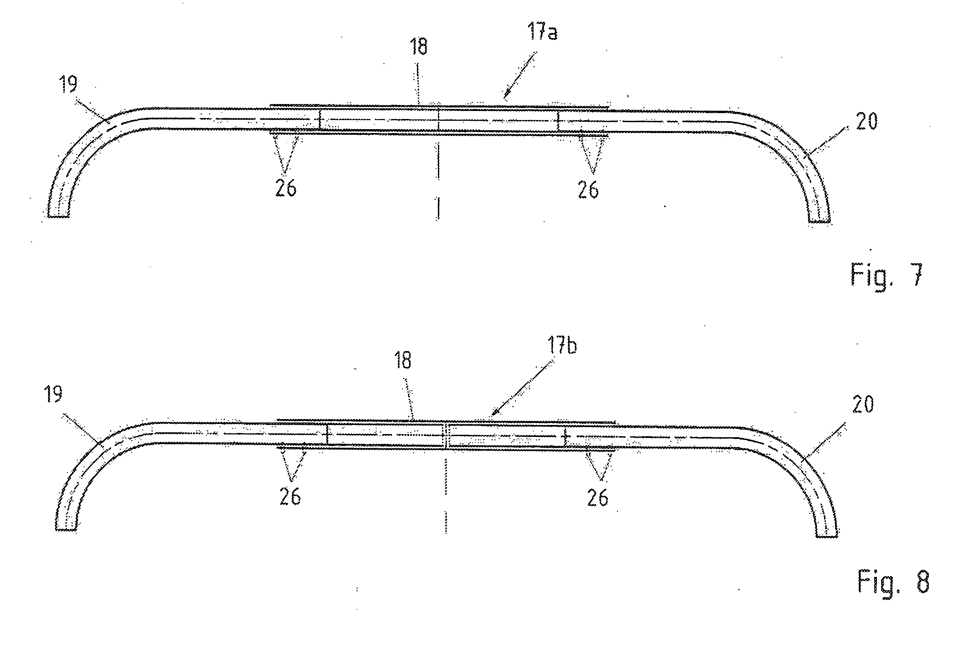

Figur 7 zeigt eine Bügelanordnung 17a, bei welcher auf die Darstellung der Stelleinrichtung verzichtet worden ist. Es ist zu erkennen, dass der mittige Bügel 18 durchgehend gestaltet ist. Das soll verdeutlichen, dass eine zentrale Stelleinrichtung vorgesehen sein kann, die gleichzeitig auf beide Auflaufhörner 19, 20 wirkt. Es ist aber auch denkbar, eine zentrale Zylinder-Kolben-Anordnung vorzusehen, die zwei Kolben besitzt, wobei der zentrale Raum zwischen den beiden Kolben zum Ausfahren der Auflaufhörner 19, 20 druckbeaufschlagt wird. Zum Einfahren der Auflaufhörner 19, 20 können die jeweiligen Ringräume der Zylinder-Kolben-Anordnung druckbeaufschlagt werden.

Der Unterschied zu den vorherigen Ausführungsformen besteht aber insbesondere darin, dass Arretierungsmittel 26 vorgesehen sind, weiche die Auflaufhörner 19, 20 in der gewünschten Position arretieren können. Die Arretierung kann in Form von Sicherungsstiften ausgebildet sein, die durch Fluiddruck oder Federspannung betätigt werden. Die Arretierung könnte auch elektrisch oder durch magnetische Kräfte erfolgen.

Die Ausführungsform der Figur 8 sieht ebenfalls solche Arretierungsmittel 26 vor. Der Unterschied zur Figur 7 ist, dass anstelle einer zentralen Stelleinrichtung in Anlehnung an die Ausführungsform der Figur 5 jedem Auflaufhorn 19, 20 jeweils wenigstens eine separate Stelleinrichtung zugeordnet ist. Die Trennlinie in der Mittelquerebene der Bügelanordnung 6b soll verdeutlichen, dass es wenigstens zwei Stelleinrichtungen gibt.

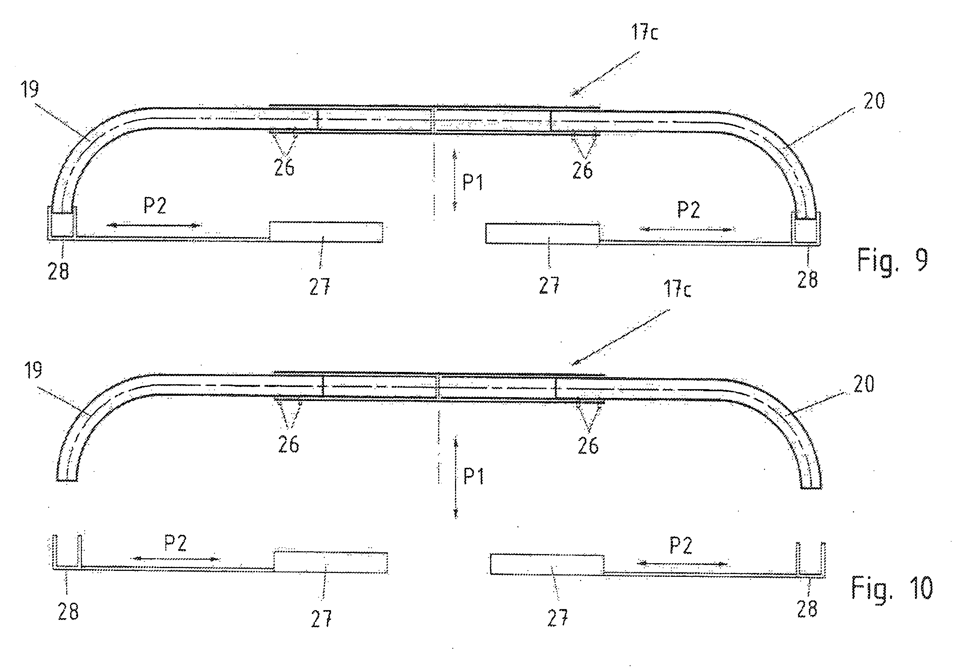

Die Ausführungsformen der Figuren 9 und 10 weisen sowohl die in den Figuren 8 und 9 dargestellten Arretierungsmittel auf als auch Stelleinrichtungen 23, die allerdings extern an der Bügelanordnung 17c angeordnet sind. Die dargestellten Stelleinrichtungen 23 besitzen jeweils ein Koppelmittel 28, hier in Form eines Greifers oder einer Tasche, in welche die unteren, freien Enden der Auflaufhörner 19, 20 einfassen können. Die Stelleinrichtungen 23 befinden sich an dem in Figur 3 dargestellten Grundrahmen 21 des Stromabnehmers 29, so dass die Auflaufhörner 19, 20 nur dann mit den Stelleinrichtungen 27 in Eingriff gelangen, wenn die Stromabnehmerwippe abgesenkt ist.

Diese Stelleinrichtung kann aber auch außerhalb des Stromabnehmers 29 z.B. am Fahrzeugdach angebracht werden. Letzteres hätte den wesentlichen Vorteil, dass die Stelleinrichtung 27 außerhalb des unter Hochspannung stehenden Stromabnehmerteils angeordnet sein kann, so dass für die Stelleinrichtung keine besondere Hochspannungsisolierung erforderlich ist.

Figur 9 zeigt, dass die Bügelanordnung 17c in der Höhe relativ zu den Stelleinrichtungen 27 verlagerbar ist. Der Pfeil P1 zeigt, dass die Bügelanordnung 17c in der Höhe gegenüber der ortsfesten Stelleinrichtung 27 verlagerbar ist. Die Pfeile P2 verdeutlichen, dass der Abstand zwischen den Koppelmittel 28 entsprechend dem Abstand der Auflaufhörner 19, 20 veränderbar ist. Die Koppelmittel 28, die auch als Stelleingriff oder Greifer bezeichnet werden können, könnten auch noch senkrecht zu der Bewegungsrichtung P2 und P1 verschoben werden, so dass die Koppelmittel 28 nur dann mit den Auflaufhörnern 19 und 20 verbunden sind, wenn dieses explizit gefordert ist. So kann der Stromabnehmer 29 in normaler, abgesenkter Position der Stromabnehmerwippe ohne direkten Kontakt zu dem Koppelmittel 28 stehen. Das Koppelmittel kann auch aus elektrisch isoliertem Material gefertigt sein.

## Patentansprüche

1. Stromabnehmer für ein Schienenfahrzeug zur Kontaktierung mit einem Fahrdraht einer Oberleitung
■ mit einer Stromabnehmerwippe (13, 15), die auf einem Träger (3) gelagert und über den Träger (3) mit dem Schienenfahrzeug verbunden ist, wobei die Breite der Stromabnehmerwippe (13, 15) an mindestens zwei unterschiedliche Stromübertragungssysteme anpassbar ist,
■ mit einer oder mehreren Schleifleisten (12a, 12b, 16), die auf der Stromabnehmerwippe (13, 15) angeordnet sind, wobei die Schleifleisten (12a, 12b, 16) derart ausgebildet sind, dass sie für mindestens zwei stromsystemabhängige Wippenbreiten einsetzbar sind,
■ mit einer Bügelanordnung (14, 17, 17a-c), die auf der Stromabnehmerwippe (13, 15) quer zur Fahrtrichtung verlaufend und benachbart zu mindestens einer der Schleifleisten (12a, 12b, 3) angeordnet ist, wobei die Bügelanordnung (14, 17, 17a-c) an jedem Ende ein Auflaufhorn (2a, 2b, 19, 20) aufweist, wobei die Auflaufhörner (2a, 2b, 19, 20) gegensätzlich zueinander und quer zur Fahrtrichtung verschiebbar sind, und
■ mit einer Stelleinrichtung (4, 27), mit der der Abstand zwischen den Auflaufhörnern (2a, 2b, 19, 20) quer zur Fahrtrichtung veränderbar ist, wobei die beiden Auflaufhörner (2a, 2b, 19, 20) entlang einer gemeinsamen Achse symmetrisch zueinander derart verschiebbar sind, dass der einzige Bügel (1) für mindestens zwei stromsystemabhängige Wippenbreiten einsetzbar ist,
**dadurch gekennzeichnet,**
**dass** die Bügelanordnung (14, 17, 17a-c) von einem einzigen Bügel (1) gebildet wird, und
■ **dass** die Stelleinrichtung (4, 27) dem einzigen Bügel (1) zugeordnet ist und mindestens eine fluidbetriebene Zylinder-Kolben-Anordnung (5,5a,5b, 23, 23a, 24, 24a) und mindestens eine damit zusammenwirkende Rückholfeder (6,6a,6b) aufweist.

2. Stromabnehmer nach Anspruch 1, **dadurch gekennzeichnet, dass** die Schleifleisten (12a, 12b, 16) starr mit der Stromabnehmerwippe (13, 15) verbunden sind und gegen Schleifleisten einer anderen Länge austauschbar sind.

3. Stromabnehmer nach Anspruch 1 oder 2, **dadurch gekennzeichnet, dass** bei der Zylinder-Kolben-Anordnung (5, 5a, 5b, 23, 23a, 24, 24a) der Kolben (7, 7a, 7b, 12) relativ zum Zylinder (8, 8a, 8b) in einer ersten Richtung durch Beaufschlagung mit Fluiddruck und in einer zweiten, der ersten Richtung entgegengesetzten Richtung durch Beaufschlagung mit der Federkraft der Rückholfeder (6, 6a, 6b) bewegbar ist.

4. Stromabnehmer nach einem der Ansprüche 1 bis 3, **dadurch gekennzeichnet, dass** der Kolben (7, 7a, 7b) relativ zum Zylinder (8, 8a, 8b) in der ersten Richtung hydraulisch oder pneumatisch bewegbar ist.

5. Stromabnehmer nach einem der Ansprüche 1 bis 4, **dadurch gekennzeichnet, dass** die Rückholfeder (6, 6a, 6b) eine Schraubenfeder ist, die vorzugsweise um die Zylinder-Kolben-Anordnung (5, 5a, 5b) herum angeordnet ist.

6. Stromabnehmer nach einem der Ansprüche 1 bis 5, **dadurch gekennzeichnet, dass** der Bügel (1) dreiteilig ist und ein Scheitelrohr (9) aufweist, zu dem die beiden Auflaufhörner (2a, 2b, 19, 20) beweglich sind und das als Führung für die beiden Auflaufhörner (2a, 2b, 19, 20) dient.

7. Stromabnehmer nach Anspruch **6, dadurch gekennzeichnet, dass** je Auflaufhorn (2a, 2b 19, 20) eine Zylinder-Kolben-Anordnung (5a, 5b) vorgesehen ist.

8. Stromabnehmer nach Anspruch 7, **dadurch gekennzeichnet, dass** mindestens eine der Zylinder-Kolben-Anordnungen (5a, 5b, 23, 23a, 24, 24a) in den Bügel (1) integriert ist.

9. Stromabnehmer nach Anspruch 7, **dadurch gekennzeichnet, dass** der Zylinder (8, 8a, 8b) oder der Kolben (7, 7a, 7b) mindestens einer der Zylinder-Kolben-Anordnungen (5a, 5b, 23, 23a, 24, 24a) vom Scheitelrohr (9) gebildet wird.

10. Stromabnehmer nach Anspruch 7, **dadurch gekennzeichnet, dass** der Zylinder (8, 8a, 8b) oder der Kolben (7, 7a, 7b) mindestens einer der Zylinder-Kolben-Anordnungen (5a, 5b, 23, 23a, 24, 24a) vom jeweiligen Auflaufhorn (2a, 2b, 19, 20) gebildet wird.

11. Stromabnehmer nach einem der Ansprüche 6 bis 10, **dadurch gekennzeichnet, dass** je Auflaufhorn (2a, 2b, 19, 20) eine Rückholfeder (6a, 6b) vorgesehen ist.

12. Stromabnehmer nach einem der Ansprüche 1 bis 5, **dadurch gekennzeichnet, dass** der Bügel (1) zweiteilig ist und die beiden Auflaufhörner (2a, 2b, 19, 20) ineinander gesteckt sind und sich gegenseitig führen.

13. Stromabnehmer nach Anspruch 12, **dadurch gekennzeichnet, dass** für beide Auflaufhörner (2a, 2b, 19, 20) zusammen eine gemeinsame Zylinder-Kolben-Anordnung (5) vorgesehen ist.

14. Stromabnehmer nach Anspruch 13, **dadurch gekennzeichnet, dass** die Zylinder-Kolben-Anordnung (5) in eines oder beide Auflaufhörner (2a, 2b, 19, 20) integriert ist.

15. Stromabnehmer nach Anspruch 13, **dadurch gekennzeichnet, dass** der Zylinder (8) oder der Kolben (7) von einem der Auflaufhörner (2a, 2b, 19, 20) gebildet wird.

16. Stromabnehmer nach Anspruch 15, **dadurch gekennzeichnet, dass** der Zylinder (8) von einem und der Kolben (7) von dem anderen der Auflaufhörner (2a, 2b, 19 20) gebildet wird.

17. Stromabnehmer nach einem der Ansprüche 12 bis 16, **dadurch gekennzeichnet, dass** für beide Auflaufhörner (2a, 2b) zusammen eine gemeinsame Rückholfeder (6) vorgesehen ist, deren eines Ende mit einem der Auflaufhörner (2a, 2b) und deren anderes Ende mit dem anderen der Auflaufhörner (2a, 2b) verbunden ist.

18. Stromabnehmer nach einem der Ansprüche 1 bis 17, **dadurch gekennzeichnet, dass** die Zylinder-Kolben-Anordnung (5, 5a, 5b) mittels einer Druckleitung (10) mit einer Steuereinrichtung (11), insbesondere mit einem Druckbehälter oder einem Kompressor der Steuereinrichtung (11), verbunden ist.

19. Stromabnehmer nach Anspruch 18, **dadurch gekennzeichnet, dass** die Druckleitung (10) mit einem Ventil, vorzugsweise Magnetventil, versehen ist.

20. Stromabnehmer nach Anspruch 18 oder 19, **dadurch gekennzeichnet, dass** die Steuereinrichtung (11) mit Anzeigemitteln zur Anzeige der horizontalen Stellung der Auflaufhörner (2a, 2b, 19, 20) oder der Breite des Bügels (1), bezogen auf die Richtung quer zur Fahrtrichtung, und/oder mit Anzeigemitteln zur Anzeige der vertikalen Stellung des Stromabnehmers oder der Höhe des Stromabnehmers, versehen ist.

21. Stromabnehmer nach einem der Ansprüche 1 bis 20, **dadurch gekennzeichnet, dass** zur Vergrößerung oder Differenzierung des Hubweges der Auflaufhörner (19, 20) mehrere Zylinder-Kolben-Anordnung in einer Reihenschaltung angeordnet sind.

22. Stromabnehmer nach Anspruch 21, **dadurch gekennzeichnet, dass** die Hubewege von in Reihe geschalteten Zylinder-Kolben-Anordnung unterschiedlich sind.

23. Stromabnehmer nach einem der Ansprüche 1 bis 22, **dadurch gekennzeichnet, dass** Arretierungsmittel (26) vorgesehen sind, mittels welcher die Auflaufhörner (19, 20) in einer ausgefahrenen und/oder einer eingefahrenen Betriebsstellung (A-D) gegenüber dem Bügel (18) festsetzbar sind.

24. Stromabnehmer nach Anspruch 23, **dadurch gekennzeichnet, dass** die Arretierungsmittel (26) elektrisch, magnetisch, durch Federkraft oder fluidisch betätigbar sind.

25. Stromabnehmer nach Anspruch 23 oder 24, **dadurch gekennzeichnet, dass** die Zylinder-Kolben-Anordnung (23, 23a, 24, 24a) bei in einer ausgefahrenen und/oder eingefahrenen Betriebsstellung (A-D) festgesetzten Auflaufhörnern (19, 20) druckfrei geschaltet ist.

26. Stromabnehmer nach einem der Ansprüche 1 bis 7, 11 bis 13, oder 17-25, **dadurch gekennzeichnet, dass** die Zylinder-Kolben-Anordnung (27) außerhalb der Bügelanordnung (17c) angeordnet ist und nur dann mit den Auflaufhörnern (19, 20) in einen Wirkzusammenhang bringbar ist, wenn der Stromabnehmer (29) abgesenkt ist.

27. Stromabnehmer nach Anspruch 26, **dadurch gekennzeichnet, dass** die Zylinder-Kolben-Anordnung (27) Koppelmittel (28) zur lösbaren Kopplung mit den Auflaufhörnern (19, 20) besitzt, um diese quer zur Fahrtrichtung zu verlagern.

28. Stromabnehmer nach Anspruch 26 oder 27, **dadurch gekennzeichnet, dass** der Wirkeingriff durch Absenken der Stromabnehmerwippe (15) und/oder durch Verlagerung von Koppelmitteln (28) der Zylinder-Kolben-Anordnung (27) erfolgt.

29. Stromabnehmer nach Anspruch 28, **dadurch gekennzeichnet, dass** die Koppelmittel (28) aus einer von der Hubrichtung der Stromabnehmerwippe (15) und der Stellrichtung der Auflaufhörner (19, 20) aufgespannten Querebene heraus verlagerbar sind und nur zum Eingriff mit den Auflaufhörnern (19, 20) in diese Querebene verlagert werden.

30. Stromabnehmer nach einem der Ansprüche 27 bis 29, **dadurch gekennzeichnet, dass** das Koppelmittel (28) und/oder die Zylinder-Kolben-Anordnung (27) elektrisch gegenüber dem Stromabnehmer isoliert ist.

31. Stromabnehmer nach einem der Ansprüche 1 bis 30, **dadurch gekennzeichnet, dass** die Bügelanordnung (14, 17, 17a-c) in eine Schleifleiste oder in mehrere Schleifleisten integriert ist und die verstellbaren Auflaufhörner sich endseitig von einer Schleifleiste oder mehreren Schleifleisten erstrecken.

32. Stromabnehmer nach einem der Ansprüche 1 bis 31, **dadurch gekennzeichnet, dass** die Auflaufhörner zumindest mittelbar mit der Schleifleiste gekoppelt sind, welche in der Länge einstellbar ist.

## Claims

1. Current collector for a rail vehicle for contacting a contact wire of a catenary
∘ comprising a current collector head (13, 15), which is supported on a carrier (3) and is connected via the carrier (3) to the rail vehicle, wherein the width of the current collector head (13, 15) is adaptable to at least two different power transmission systems,
∘ one or more contact strips (12a, 12b, 16), which are arranged on the current collector head (13, 15), wherein the contact strips (12a, 12b, 16) are formed such that they can be used for at least two power-system-dependent head widths,
∘ a bracket arrangement (14, 17, 17a-c), which is arranged on the current collector head (13, 15) running transversely to the direction of travel and adjacent to at least one of the contact strips (12a, 12b, 3), wherein the bracket arrangement (14, 17, 17a-c) has a horn (2a, 2b, 19, 20) at each end, wherein the horns (2a, 2b, 19, 20) are displaceable opposite to one another and transversely to the direction of travel, and
∘ an adjustment device (4, 27) with which the distance between the horns (2a, 2b, 19, 20) is variable transversely to the direction of travel, wherein the two horns (2a, 2b, 19, 20) are displaceable along a common axis symmetrically to one another in such a way that the single bracket (1) can be used for at least two power-system-dependent head widths,
**characterised in that** the bracket arrangement (14, 17, 17a-c) is formed by a single bracket (1), and that
∘ the adjustment device (4, 27) is assigned to the single bracket (1) and has at least one fluid-operated cylinder-piston arrangement (5, 5a, 5b, 23, 23a, 24, 24a) and at least one return spring (6, 6a, 6b) interacting therewith.

2. Current collector according to claim 1, **characterised in that** the contact strips (12a, 12b, 16) are connected rigidly to the current collector head (13, 15) and can be exchanged for contact strips of another length.

3. Current collector according to claim 1 or 2, **characterised in that** in the cylinder-piston arrangement (5, 5a, 5b, 23, 23a, 24, 24a) the piston (7, 7a, 7b, 12) is moveable relative to the cylinder (8, 8a, 8b) in a first direction by the application of fluid pressure and in a second direction, opposed to the first direction, by the application of the spring force of the return spring (6, 6a, 6b).

4. Current collector according to one of claims 1 to 3, **characterised in that** the piston (7, 7a, 7b) is moveable relative to the cylinder (8, 8a, 8b) hydraulically or pneumatically in the first direction.

5. Current collector according to one of claims 1 to 4, **characterised in that** the return spring (6, 6a, 6b) is a coil spring, which is preferably arranged around the cylinder-piston arrangement (5, 5a, 5b).

6. Current collector according to one of claims 1 to 5, **characterised in that** the bracket (1) is in three parts and has an apex tube (9), with respect to which the two horns (2a, 2b, 19, 20) can be moved and which acts as a guide for the two horns (2a, 2b, 19, 20).

7. Current collector according to claim 6, **characterised in that** a cylinder-piston arrangement (5a, 5b) is provided for each horn (2a, 2b, 19, 20).

8. Current collector according to claim 7, **characterised in that** at least one of the cylinder-piston arrangements (5a, 5b, 23, 23a, 24, 24a) is integrated into the bracket (1).

9. Current collector according to claim 7, **characterised in that** the cylinder (8, 8a, 8b) or the piston (7, 7a, 7b) of at least one of the cylinder-piston arrangements (5a, 5b, 23, 23a, 24, 24a) is formed by the apex tube (9).

10. Current collector according to claim 7, **characterised in that** the cylinder (8, 8a, 8b) or the piston (7, 7a, 7b) of at least one of the cylinder-piston arrangements (5a, 5b, 23, 23a, 24, 24a) is formed by the respective horn (2a, 2b, 19, 20).

11. Current collector according to one of claims 6 to 10, **characterised in that** a return spring (6a, 6b) is provided for each horn (2a, 2b, 19, 20).

12. Current collector according to one of claims 1 to 5, **characterised in that** the bracket (1) is in two parts and the two horns (2a, 2b, 19, 20) are inserted into one another and guide one another.

13. Current collector according to claim 12, **characterised in that** a common cylinder-piston arrangement (5) is provided for both horns (2a, 2b, 19, 20) together.

14. Current collector according to claim 13, **characterised in that** the cylinder-piston arrangement (5) is integrated into one or both horns (2a, 2b, 19, 20).

15. Current collector according to claim 13, **characterised in that** the cylinder (8) or the piston (7) is formed by one of the horns (2a, 2b, 19, 20).

16. Current collector according to claim 15, **characterised in that** the cylinder (8) is formed by one of the horns (2a, 2b, 19, 20) and the piston (7) by the other of the horns.

17. Current collector according to one of claims 12 to 16, **characterised in that** a common return spring (6) is provided for both horns (2a, 2b) together, one end of which spring is connected to one of the horns (2a, 2b) and the other end of which is connected to the other of the horns (2a, 2b).

18. Current collector according to one of claims 1 to 17, **characterised in that** the cylinder-piston arrangement (5, 5a, 5b) is connected by means of a pressure line (10) to a control device (11), in particular to a pressure vessel or a compressor of the control device (11).

19. Current collector according to claim 18, **characterised in that** the pressure line (10) is provided with a valve, preferably a solenoid valve.

20. Current collector according to claim 18 or 19, **characterised in that** the control device (11) is provided with display means for displaying the horizontal position of the horns (2a, 2b, 19, 20) or the width of the bracket (1), relative to the direction transverse to the direction of travel, and/or with display means for displaying the vertical position of the current collector or the height of the current collector.

21. Current collector according to one of claims 1 to 20, **characterised in that** to enlarge or differentiate the stroke path of the horns (19, 20) several cylinder-piston arrangements are arranged in a series connection.

22. Current collector according to claim 21, **characterised in that** the stroke paths of cylinder-piston arrangements connected in series are different.

23. Current collector according to one of claims 1 to 22, **characterised in that** locking means (26) are provided, by means of which the horns (19, 20) can be fixed in an extended and/or a retracted operating position (A-D) relative to the bracket (18).

24. Current collector according to claim 23, **characterised in that** the locking means (26) are actuatable electrically, magnetically, by spring force or fluidically.

25. Current collector according to claim 23 or 24, **characterised in that** the cylinder-piston arrangement (23, 23a, 24, 24a) is switched to pressure-free when the horns (19, 20) are fixed in an extended and/or retracted operating position (A-D).

26. Current collector according to one of claims 1 to 7, 11 to 13, or 17-25, **characterised in that** the cylinder-piston arrangement (27) is arranged outside the bracket arrangement (17c) and can only be brought into interaction with the horns (19, 20) when the current collector (29) is lowered.

27. Current collector according to claim 26, **characterised in that** the cylinder-piston arrangement (27) has coupling means (28) for detachable coupling with the horns (19, 20) in order to displace these transversely to the direction of travel.

28. Current collector according to claim 26 or 27, **characterised in that** the active engagement takes place due to lowering of the current collector head (15) and/or to displacement of coupling means (28) of the cylinder-piston arrangement (27).

29. Current collector according to claim 28, **characterised in that** the coupling means (28) are displaceable out of a transverse plane which stretches from the lifting direction of the current collector head (15) and the setting direction of the horns (19, 20), and are displaced in this transverse plane only for engagement with the horns (19, 20).

30. Current collector according to one of claims 27 to 29, **characterised in that** the coupling means (28) and/or the cylinder-piston arrangement (27) is insulated electrically relative to the current collector.

31. Current collector according to one of claims 1 to 30, **characterised in that** the bracket arrangement (14, 17, 17a-c) is integrated into a contact strip or into a plurality of contact strips and the adjustable horns extend, at the end, from a contact strip or a plurality of contact strips.

32. Current collector according to one of claims 1 to 31, **characterised in that** the horns can be coupled at least indirectly to the contact strip, which is adjustable in length.

## Revendications

1. Pantographe pour un véhicule ferroviaire pour la mise en contact avec un fil de contact d'un conducteur aérien,
- avec un archet de pantographe (13, 15), qui est logé sur un support (3) et qui est relié au véhicule ferroviaire par l'intermédiaire du support (3), la largeur de l'archet de pantographe (13, 15) pouvant être adaptée à au moins deux systèmes de transmission de courant différents,
- avec une ou plusieurs bandes de frottement (12a, 12b, 16), qui sont agencées sur l'archet de pantographe (13, 15), les bandes de frottement (12a, 12b, 16) étant conçues de telle sorte qu'elles peuvent être utilisées pour au moins deux largeurs d'archet dépendantes du système de courant,
- avec un dispositif à étrier (14, 17, 17a-c), qui est agencé sur l'archet de pantographe (13, 15) de manière à s'étendre transversalement à la direction d'avance et au voisinage d'au moins l'une des bandes de frottement (12a, 12b, 3), le dispositif à étrier (14, 17, 17a-c) comportant une corne de pantographe (2a, 2b, 19, 20) à chaque extrémité, les cornes de pantographe (2a, 2b, 19, 20) étant déplaçables en sens contraire l'une par rapport à l'autre et transversalement à la direction d'avance,
- et avec un dispositif de réglage (4, 27), avec lequel la distance entre les cornes de pantographe (2a, 2b, 19, 20) transversalement à la direction d'avance peut être modifiée, les deux cornes de pantographe (2a, 2b, 19, 20) pouvant être déplacées de telle sorte symétriquement l'une par rapport à l'autre le long d'un axe commun que l'unique étrier (1) peut être utilisé pour au moins deux largeurs d'archet dépendantes du système de courant,
**caractérisé**
**en ce que** le dispositif à étrier (14, 17, 17a-c) est formé par un unique étrier (1)
et **en ce que** le dispositif de réglage (4, 27) est associé à l'unique étrier (1) et comporte au moins un dispositif cylindre-piston (5, 5a, 5b, 23, 23a, 24, 24a) à commande par fluide et au moins un ressort de rappel (6, 6a, 6b) coopérant avec ledit dispositif cylindre-piston.

2. Pantographe selon la revendication 1, **caractérisé en ce que** les bandes de frottement (12a, 12b, 16) sont reliées de manière rigide à l'archet de pantographe (13, 15) et peuvent être échangées contre des bandes de frottement d'une autre longueur.

3. Pantographe selon la revendication 1 ou 2, **caractérisé en ce que**, dans le dispositif cylindre-piston (5, 5a, 5b, 23, 23a, 24, 24a), le piston (7, 7a, 7b, 12) peut être déplacé par rapport au cylindre (8, 8a, 8b) dans une première direction par application d'une pression de fluide et dans une deuxième direction, opposée à la première direction, par application de la force de rappel du ressort de rappel (6, 6a, 6b).

4. Pantographe selon l'une des revendications 1 à 3, **caractérisé en ce que** le piston (7, 7a, 7b) peut être déplacé par rapport au cylindre (8, 8a, 8b) de façon hydraulique ou pneumatique dans la première direction.

5. Pantographe selon l'une des revendications 1 à 4, **caractérisé en ce que** le ressort de rappel (6, 6a, 6b) est un ressort à boudin qui est agencé de préférence autour du dispositif cylindre-piston (5, 5a, 5b).

6. Pantographe selon l'une des revendications 1 à 5, **caractérisé en ce que** l'étrier (1) est en trois parties et comporte un tube horizontal (9) par rapport auquel les deux cornes de pantographe (2a, 2b, 19, 20) sont mobiles et qui sert de guide pour les deux cornes de pantographe (2a, 2b, 19, 20).

7. Pantographe selon la revendication 6, **caractérisé en ce qu'**il est prévu un dispositif cylindre-piston (5a, 5b) par corne de pantographe (2a, 2b, 19, 20).

8. Pantographe selon la revendication 7, **caractérisé en ce qu'**au moins l'un des dispositifs cylindre-piston (5a, 5b, 23, 23a, 24, 24a) est intégré dans l'étrier (1).

9. Pantographe selon la revendication 7, **caractérisé en ce que** le cylindre (8, 8a, 8b) ou le piston (7, 7a, 7b) d'au moins l'un des dispositifs cylindre-piston (5a, 5b, 23, 23a, 24, 24a) est formé par le tube horizontal (9).

10. Pantographe selon la revendication 7, **caractérisé en ce que** le cylindre (8, 8a, 8b) ou le piston (7, 7a, 7b) d'au moins l'un des dispositifs cylindre-piston (5a, 5b, 23, 23a, 24, 24a) est formé par la corne de pantographe (2a, 2b, 19, 20) respective.

11. Pantographe selon l'une des revendications 6 à 10, **caractérisé en ce qu'**il est prévu un ressort de rappel (6a, 6b) par corne de pantographe (2a, 2b, 19, 20).

12. Pantographe selon l'une des revendications 1 à 5, **caractérisé en ce que** l'étrier (1) est en deux parties et les deux cornes de pantographe (2a, 2b, 19, 20) sont placées l'une dans l'autre et se guident mutuellement.

13. Pantographe selon la revendication 12, **caractérisé en ce qu'**il est prévu un dispositif cylindre-piston (5) commun pour les deux cornes de pantographe (2a, 2b, 19, 20) ensemble.

14. Pantographe selon la revendication 13, **caractérisé en ce que** le dispositif cylindre-piston (5) est intégré dans l'une ou les deux des cornes de pantographe (2a, 2b, 19, 20).

15. Pantographe selon la revendication 13, **caractérisé en ce que** le cylindre (8) ou le piston (7) est formé par l'une des cornes de pantographe (2a, 2b, 19, 20).

16. Pantographe selon la revendication 15, **caractérisé en ce que** le cylindre (8) est formé par l'une des cornes de pantographe (2a, 2b, 19, 20) et le piston (7) par l'autre.

17. Pantographe selon l'une des revendications 12 à 16, **caractérisé en ce qu'**il est prévu pour les deux cornes de pantographe (2a, 2b) ensemble un ressort de rappel (6) commun dont une extrémité est reliée à l'une des cornes de pantographe (2a, 2b) et dont l'autre extrémité est reliée à l'autre corne de pantographe (2a, 2b).

18. Pantographe selon l'une des revendications 1 à 17, **caractérisé en ce que** le dispositif cylindre-piston (5, 5a, 5b) est relié au moyen d'une conduite de pression (10) à un dispositif de commande (11), notamment à un réservoir sous pression ou à un compresseur du dispositif de commande (11).

19. Pantographe selon la revendication 18, **caractérisé en ce que** la conduite de pression (10) est munie d'une vanne, de préférence d'une électrovanne.

20. Pantographe selon la revendication 18 ou 19, **caractérisé en ce que** le dispositif de commande (11) est muni de moyens d'affichage pour afficher la position horizontale des cornes de pantographe (2a, 2b, 19, 20) ou la largeur de l'étrier (1), par rapport à la direction transversale à la direction d'avance, et/ou de moyens d'affichage pour afficher la position verticale du pantographe ou la hauteur du pantographe.

21. Pantographe selon l'une des revendications 1 à 20, **caractérisé en ce que**, pour augmenter ou différencier la course des cornes de pantographe (19, 20), plusieurs dispositifs cylindre-piston sont agencés dans un montage en série.

22. Pantographe selon la revendication 21, **caractérisé en ce que** les courses de dispositifs cylindre-piston montés en série sont différentes.

23. Pantographe selon l'une des revendications 1 à 22, **caractérisé en ce qu'**il est prévu des moyens de blocage (26) au moyen desquels les cornes de pantographe (19, 20) peuvent être immobilisées dans une position de fonctionnement sortie et/ou rentrée (A-D) par rapport à l'étrier (18).

24. Pantographe selon la revendication 23, **caractérisé en ce que** les moyens de blocage (26) peuvent être actionnés de façon électrique, de façon magnétique, par une force de ressort ou par un fluide.

25. Pantographe selon la revendication 23 ou 24, **caractérisé en ce que** le dispositif cylindre-piston (23, 23a, 24, 24a) n'est soumis à aucune pression lorsque les cornes de pantographe (19, 20) sont immobilisées dans une position de fonctionnement sortie et/ou rentrée (A-D).

26. Pantographe selon l'une des revendications 1 à 7, 11 à 13 ou 17 à 25, **caractérisé en ce que** le dispositif cylindre-piston (27) est agencé en dehors du dispositif à étrier (17c) et ne peut être amené à coopérer avec les cornes de pantographe (19, 20) que si le pantographe (29) est abaissé.

27. Pantographe selon la revendication 26, **caractérisé en ce que** le dispositif cylindre-piston (27) comporte des moyens de couplage (28) pour le couplage amovible avec les cornes de pantographe (19, 20) afin de déplacer celles-ci transversalement à la direction d'avance.

28. Pantographe selon la revendication 26 ou 27, **caractérisé en ce que** la mise en prise active s'effectue par abaissement de l'archet de pantographe (15) et/ou par déplacement de moyens de couplage (28) du dispositif cylindre-piston (27).

29. Pantographe selon la revendication 28, **caractérisé en ce que** les moyens de couplage (28) sont déplaçables hors d'un plan transversal déterminé par la direction de levée de l'archet de pantographe (15) et par la direction de réglage des cornes de pantographe (19, 20) et ne sont déplacés dans ce plan transversal que pour la mise en prise avec les cornes de pantographe (19, 20).

30. Pantographe selon l'une des revendications 27 à 29, **caractérisé en ce que** le moyen de couplage (28) et/ou le dispositif cylindre-piston (27) est isolé électriquement du pantographe.

31. Pantographe selon l'une des revendications 1 à 30, **caractérisé en ce que** le dispositif à étrier (14, 17, 17a-c) est intégré dans une bande de frottement ou dans plusieurs bandes de frottement et les cornes de pantographe déplaçables s'étendent à l'extrémité d'une bande de frottement ou de plusieurs bandes de frottement.

32. Pantographe selon l'une des revendications 1 à 31, **caractérisé en ce que** les cornes de pantographe sont couplées au moins indirectement à la bande de frottement qui est réglable en longueur.
